**Europäisches Patentamt**

**European Patent Office**

**Office européen des brevets**

(19)

(11) Veröffentlichungsnummer : **0 075 034**
**B1**

(12)

# EUROPÄISCHE PATENTSCHRIFT

(45) Veröffentlichungstag der Patentschrift :
30.11.88

(51) Int. Cl.⁴ : **A 01 D 41/12, B 65 G 65/46**

(21) Anmeldenummer : **81107438.4**

(22) Anmeldetag : **19.09.81**

(54) Vorrichtung zum Entleeren von Erntegut aus einem Sammelbehälter.

(43) Veröffentlichungstag der Anmeldung :
30.03.83 Patentblatt 83/13

(45) Bekanntmachung des Hinweises auf die Patenterteilung : **30.11.88 Patentblatt 88/48**

(84) Benannte Vertragsstaaten :
**BE DE FR GB IT SE**

(56) Entgegenhaltungen :
**DD-A- 134 908**
**DE-A- 1 916 165**
**US-A- 3 841 536**

(73) Patentinhaber : **DEERE & COMPANY**
**1 John Deere Road**
**Moline Illinois 61265 (US)**

(72) Erfinder : **Dannigkeit, Helmut**
**Lerchenstrasse 6**
**D-6661 Battweiler (DE)**

(74) Vertreter : Feldmann, Bernhard et al
**DEERE & COMPANY European Office, Patent Department Steubenstrasse 36-42 Postfach 503**
**D-6800 Mannheim 1 (DE)**

Jouve, 18, rue St-Denis, 75001 Paris, France

## Beschreibung

Die Erfindung bezieht sich auf eine Vorrichtung zum Entleeren von Erntegut aus einem Sammelbehälter für einen Mähdrescher mit mindestens einer Entleerungsschnecke, die durch eine mit dem Boden des Sammelbehälters mindestens eine Einlaßöffnung bildende Abdeckvorrichtung abgedeckt ist, wobei der wirksame Querschnitt der Einlaßöffnung mittels einer verstellbaren Vorrichtung veränderbar ist, die gemeinsam mit der Entleerungsschnecke unterhalb der Abdeckvorrichtung liegt.

Bei dieser bekannten Vorrichtung zum Entleeren von Erntegut aus einem Sammelbehälter für Mähdrescher (US-A-3 841 536) ist die verstellbare Vorrichtung als plattenförmige Schwenkklappe ausgebildet, über die beiderseits der Längsseite der Entleerungsschnecke vorhandene, durch die Abdeckvorrichtung gebildete Einlaßöffnungen verschlossen werden können. Durch das Verschließen der Einlaßöffnungen kann die Entleerungsschnecke mit geringem Anlaufmoment angetrieben werden. Die Schwenkklappe wird über ein Gestänge manuell verschwenkt, erstreckt sich über die gesamte Breite und Länge der Entleerungsschnecke, und das im Sammelbehälter befindliche Gut drückt auf die Verschlußseiten. Hierdurch sind neben dem großen baulichen Aufwand erhebliche Kräfte aufzubringen, um die Schwenkklappe überhaupt verschwenken zu können. Hinzu kommt, daß die zwischen dem Sammelbehälterboden und der Abdeckvorrichtung gebildeten Einlaßöffnungen beim Entleervorgang und bei derart verschwenkter Schwenkklappe, daß sie die Einlaßöffnungen freigibt, die Entleerleistung begrenzen und bei feuchtem Gut in diesem Bereich Brückenbildungen entstehen, die ein Entleeren verhindern oder zumindest erheblich erschweren.

Um Brückenbildungen in einem Sammelbehälter für Mähdrescher zu verhindern, ist es bereits bekannt (DD-A- 134 908), über der Entleerungsschnecke einen Kratzförderer vorzusehen, der aus einer waagerechten Arbeitsstellung in eine senkrechte inoperative Stellung verstellbar ist. Die Anordnung ist dabei so getroffen, daß die Schneckenmulde der Entleerungsschnecke stets mit Erntegut gefüllt ist, so daß beim Anfahren der Entleerungsschnecke große Momente erforderlich sind.

Auch ist es nicht neu (DE-A-1 916 165), in einem Austraggehäuse für ein Wannensilo vor einer Entleerungsschnecke eine oder mehrere Paddelwalzen zum Dosieren vorzusehen. Im Falle mehrerer Paddelwalzen werden diese alternativ angetrieben, um zunächst eine Hälfte des Wannensilos und dann die andere Hälfte zu entleeren. Die Paddelwalzen können dabei über eine lösbare Kupplung von dem Antrieb der Entleerungsschnecke aus antreibbar sein, wobei der Abstand der Paddelwalzen zu der feststehenden Seitenwand des Austraggehäuses verstellbar oder bei ortsfesten Paddelwalzen die Seitenwand verschwenkbar ist.

Demgegenüber liegt der Erfindung die Aufgabe zugrunde, das Anfahrmoment der Entleerungsschnecke eines Sammelbehälters mit einfachen baulichen Mitteln so klein wie möglich zu halten, wobei Brückenbildungen des im Sammelbehälter befindlichen Gutes vermieden werden sollen. Diese Aufgabe wird dadurch gelöst, daß die Entleerungsschnecke am Boden angeordnet und die verstellbare Vorrichtung als wenigstens eine von derselben Antriebsvorrichtung wie die Entleerungsschnecke antreibbare, mehrere Förderblätter aufweisende Paddelwalze ausgebildet ist, wobei jeweils das dem Boden am nächsten liegende Ende eines Förderblattes mit dem Boden den kleinsten wirksamen Querschnitt für die Einlaßöffnung bildet und bei Stillstand der Paddelwalze der wirksame Querschnitt wesentlich kleiner ist als bei angetriebener Paddelwalze, deren Längsachse parallel zur Längsachse der Entleerungsschnecke verläuft. Hierdurch wird gewährleistet, daß bis zu Beginn der Förderung der Entleerungsschnecke das Antriebsmoment klein gehalten werden kann, da nur wenig Erntegut sich im Einzugsbereich der Entleerungsschnecke ansammeln kann, so daß hierdurch eine übermäßige Beanspruchung der Antriebsvorrichtung vermieden werden kann. Dies ist insbesondere dann von Vorteil, wenn das Erntegut einen hohen Feuchtigkeitsgrad aufweist und der innere Reibungswiderstand des Erntegutes groß is. Verändert sich jedoch beispielsweise das Erntegut oder auch die Feuchte des Erntegutes, so läßt sich durch Verstellen der Paddelwalze der Durchlaßquerschnitt zur Entleerungsschnecke ohne weiteres verändern. Etwaige Brückenbildungen werden bei rotierender Paddelwalze abgebaut. Da die Entleerungsschnecke sowie die Paddelwalze durch die Abdeckvorrichtung abgedeckt sind, können diese belastungsfrei angetrieben werden, wenn sich bereits Erntegut im Sammelbehälter befindet. Außerdem ist die Paddelwalze mit relativ wenigen Förderblättern ausgerüstet, so daß sich durch die zwischen den Förderblättern gebildete Kammer zur Aufnahme des Erntegutes der Einlaßquerschnitt bei drehender Walze zusätzlich verändern läßt. Dabei ist es besonders zweckmäßig, daß die Paddelwalze in Abhängigkeit vom Antrieb der Entleerungsschnecke angetrieben werden kann.

Damit bei stillstehender Entleerungsschnecke kein Gut in deren Schneckenmulde gelangen kann, wird ferner nach der Erfindung vorgeschlagen, daß die Einlaßöffnung bei Stillstand der Paddelwalze verschließbar ist.

Zweckmäßig kann die Abdeckvorrichtung und/oder die Welle der Paddelwalze in Richtung des Bodens verstellbar angeordnet sein.

Auch kann nach einem weiteren Merkmal der Erfindung der Durchmesser des Rotationskreises der Paddelwalze größer sein als der wirksame Querschnitt der Einlaßöffnung.

Ferner wird vorgeschlagen, daß die Paddelwalze über einem schräg verlaufenden Bodenteil des Bodens angeordnet ist, wobei statt einer auch mehrere nebeneinander angeordnete Paddelwalzen vorgesehen sein können.

Schließlich kann die Abdeckvorrichtung zwei gegenüberliegende Einlaßöffnungen mit dem Boden bilden, denen je eine oder mehrere Paddelwalzen zugeordnet sind.

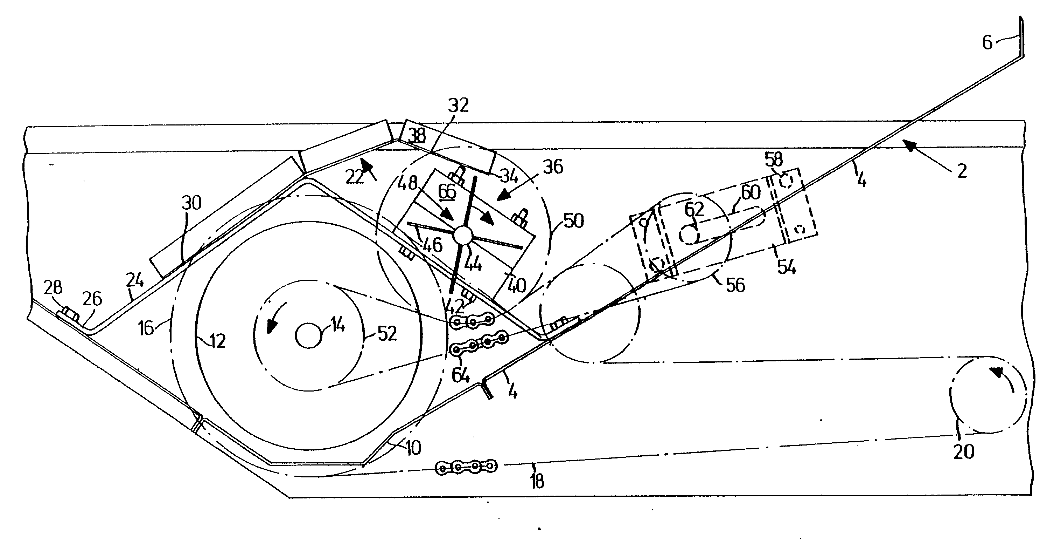

In der Zeichnung ist ein Ausführungsbeispiel einer Vorrichtung zum Entleeren eines Sammelbehälters nach der Erfindung schematisch dargestellt. In der Zeichnung ist mit 2 ein Sammelbehälter bezeichnet, der in einem in der Zeichnung nicht dargestellten Mähdrescher eingebaut werden kann. Es ist jedoch auch möglich, den Sammelbehälter 2 beispielsweise in einem Fahrzeug zu verwenden, das zur Aufnahme bzw. zum Transport von Schüttgut dient. Der Sammelbehälter 2 weist zwei schrägverlaufende Böden 4 auf, die durch eine Vorderwand 6 und eine nicht dargestellte Rückwand und zwei in der Zeichnung nicht dargestellte Seitenwände begrenzt werden. Die Böden 4 bilden eine Schneckenmulde 10, die zur Aufnahme einer Entleerungsschnecke 12 dient, die sich über die gesamte Breite des Sammelbehälters 2 erstreckt und die auf einer Welle 14 angeordnet ist. Die Welle 14 ist in den Seitenwänden drehbar gelagert und weist an ihrem einen Ende ein Kettenrad 16 auf, um das eine Antriebskette 18 geführt ist, die mit einem Antriebsrad 20 in Verbindung steht, das über eine in der Zeichnung nicht dargestellte Antriebsvorrichtung angetrieben wird. An die Entleerungsschnecke 12 schließt sich endseitig eine in der Zeichnung nicht dargestellte Austragförderschnecke an, über die das Erntegut in ein Fahrzeug abgegeben werden kann.

Über der Entleerungsschnecke 12 befindet sich eine dachförmige Abdeckvorrichtung 22, die aus einem dünnwandigen Blech gebildet sein kann und die einenends mit einer Halterung 24 fest verbunden ist. Die Halterung 24 weist an ihren unteren Enden je einen Schenkel 26 auf, der über Schraubenbolzen 28 mit dem Boden 4 des Sammelbehälters 2 verbunden ist. Im Sammelbehälter 2 können mehrere nebeneinander angeordnete Halterungen 24 vorgesehen sein, die zur Aufnahme bzw. Abstützung der Abdeckvorrichtung 22 dienen. Die Abdeckvorrichtung 22 besteht aus einem ersten parallel zur Außenoberfläche der Halterung 24 verlaufenden Abdeckteil 30, an das sich ein weiteres freistehendes dachförmiges Abdeckteil 32 anschließt, dessen freies äußeres Ende 34 mit dem rechten Boden 4 des Sammelbehälters 2 eine Einlaßöffnung 36 bildet. Die Abdeckvorrichtung 22 weist jeweils an ihrem stirnseitigen Ende Flansche 38 auf, die mit den in der Zeichnung nicht dargestellten Seitenwänden des Sammelbehälters 2 fest verbunden sind.

Auf der Halterung 24 ist ferner ein zweiteiliges Holzlager 40 über Schraubenbolzen 42 lösbar befestigt. Das Holzlager 40 dient zur Aufnahme einer Welle 44, an dem zahlreiche mit Abstand zueinander angeordnete Förderblätter 46 angeordnet sind. Die Welle 44 ergibt zusammen mit den Förderblättern 46 eine Paddelwalze 48, die etwas hinter der Einlaßöffnung 36 unterhalb der Abdeckvorrichtung 22 vorgesehen ist. Am stirnseitigen Ende der Welle 44 befindet sich ein Kettenrad 50, und ein weiteres Kettenrad 52 befindet sich auf der Welle 14 der Entleerungsschnecke 12. Vor der Einlaßöffnung 36 ist eine Halterung 54 vorgesehen, die zur Aufnahme eines Umlenkrades 56 dient. Die Halterung 54 ist mittels Schraubenbolzen 58 mit der einen Seitenwand des Sammelbehälters 2 fest verbunden. Die Halterung 54 ist mit einem Längsschlitz 60 versehen, der zur Aufnahme eines Bolzens 62 dient, der in dem Längsschlitz 60 verstellbar gelagert ist. Der Bolzen 62 kann in verschiedenen Stellungen im Längsschlitz 60 festgestellt werden. Hierzu dienen in der Zeichnung nicht dargestellte Muttern. Auf dem Bolzen 62 ist das Umlenkrad 56 drehbar gelagert, um das eine Antriebskette 64 geführt ist, die ferner um das Kettenrad 52 geführt ist. Der Außenumfang der Antriebskette 64 steht ferner mit dem Kettenrad 50 in Antriebsverbindung. Dadurch läßt sich die Paddelwalze 48 im Uhrzeigerdrehsinn und die Entleerungsschnecke 12 im entgegengesetzten Uhrzeigerdrehsinn antreiben. Der Antrieb der Entleerungsschnecke 12 und somit der Paddelwalze 48 erfolgt insgesamt über die Antriebskette 18.

Die Paddelwalze 48, die in dem Holzlager 40 drehbar aufgenommen ist, läßt sich entlang der Oberfläche der Halterung 24 verstellen, so daß die Einlaßöffnung 36 zwischen dem äußeren Ende des Förderblattes 46 und der Oberfläche des Bodens 4 verändert werden kann. Ebenso ist es auch möglich den Abdeckteil 32 mit dem Abdeckteil 30 gelenkig zu verbinden, um somit das äußere freie Ende 34 der Abdeckvorrichtung 22 mit Bezug auf den Boden 4 des Sammelbehälters 2 zu verstellen. Damit läßt sich der Gesamtquerschnitt der Einlaßöffnung 36 ebenfalls variieren.

Beim Befüllungsvorgang des Sammelbehälters 2 kann sich Erntegut nur in der unteren Hälfte der Schneckenmulde 10 ansammeln, da die Förderblätter 46 der Paddelwalze 48 ein weiteres Ansammeln des Erntegutes in der Schneckenmulde 10 verhindern. Soll nun die Entleerungsschnecke 12 angetrieben werden, so ist das Anfahrmoment für die Entleerungsschnecke 12 relativ klein, da das Gesamtgewicht des im Sammelbehälter 2 befindlichen Erntegutes nicht auf die Entleerungsschnecke 12 drückt, da ein großer Teil des Erntegutes von der Abdeckvorrichtung 22 getragen wird. Beim Antrieb der Entleerungsschnecke 12 wird auch gleichzeitig die Paddelwalze 48 angetrieben, so daß nunmehr die Entleerungsschnecke 12 mit mehr Erntegut verzögert beaufschlagt wird, so daß somit der Befüllungsgrad der Entleerungsschnecke 12 erst jetzt wesentlich erhöht wird. Der Befüllungsgrad der Entleerungsschnecke 12 ist abhängig vom Gesamtdurchlaßquerschnitt der Einlaßöffnung 36, von der Antriebsdrehzahl der Paddelwalze 48 sowie von den aus den Förderblättern 46 gebildeten Förderkammern 66.

Es ist jedoch möglich, an Stelle der einen Paddelwalze 48 mehrere nebeneinander angeordnete Paddelwalzen über den schrägverlaufenden Bodenteil des Bodens 4 des Sammelbehälters 2 vorzusehen, um auf diese Weise das auf der Oberfläche des Sammelbehälters 2 haftende Erntegut in Bewegung zu setzen und der Entleerungsschnecke 12 zuzuführen. Ferner kann die Abdeckvorrichtung 22 jeweils mit ihren beiden gegenüberliegenden Enden 34 mit der Oberfläche des entsprechenden geneigtverlaufenden Teils des Bodens 4 je eine Einlaßöffnung bilden, in deren Bereich je eine oder mehrere Paddelwalzen 48 vorgesehen werden können. Die Förderblätter 46 sind normalerweise starr, d. h. unnachgiebig ausgebildet. Sie können, je nach Beschaffenheit des Gutes, auch flexibel ausgebildet sein.

**Patentansprüche**

1. Vorrichtung zum Entleeren von Erntegut aus einem Sammelbehälter (2) für einen Mähdrescher mit mindestens einer Entleerungsschnecke (12), die durch eine mit dem Boden (4) des Sammelbehälters mindestens eine Einlaßöffnung (36) bildende Abdeckvorrichtung (22) abgedeckt ist, wobei der wirksame Querschnitt der Einlaßöffnung mittels einer verstellbaren Vorrichtung (48) veränderbar ist, .die gemeinsam mit der Entleerungsschnecke unterhalb der Abdeckvorrichtung liegt, dadurch gekennzeichnet, daß die Entleerungsschnecke (12) am Boden (4) angeordnet und die verstellbare Vorrichtung als wenigstens eine von derselben Antriebsvorrichtung wie die Entleerungsschnecke antreibbare, mehrere Förderblätter (46) aufweisende Paddelwalze (48) ausgebildet ist, wobei jeweils das dem Boden am nächsten liegende Ende eines Förderblattes mit dem Boden den kleinsten wirksamen Querschnitt für die Einlaßöffnung (36) bildet und bei Stillstand der Paddelwalze der wirksame Querschnitt wesentlich kleiner ist als bei angetriebener Paddelwalze, deren Längsachse parallel zur Längsachse der Entleerungsschnecke verläuft.

2. Vorrichtung nach Anspruch 1, dadurch gekennzeichnet, daß die Einlaßöffnung (36) bei Stillstand der Paddelwalze (48) verschließbar ist.

3. Vorrichtung nach einem oder mehreren der vorherigen Ansprüche, dadurch gekennzeichnet, daß die Abdeckvorrichtung (22) und/oder die Welle (44) der Paddelwalze (48) in Richtung des Bodens (4) verstellbar angeordnet ist.

4. Vorrichtung nach einem oder mehreren der vorherigen Ansprüche, dadurch gekennzeichnet, daß der Durchmesser des Rotationskreises der Paddelwalze (48) größer ist als der wirksame Querschnitt der Einlaßöffnung (36).

5. Vorrichtung nach einem oder mehreren der vorherigen Ansprüche, dadurch gekennzeichnet, daß die Paddelwalze (48) über einem schräg verlaufenden Bodenteil des Bodens (4) angeordnet ist.

6. Vorrichtung nach einem oder mehreren der vorherigen Ansprüche, dadurch gekennzeichnet, daß über dem schräg verlaufenden Bodenteil zahlreiche nebeneinander angeordnete Paddelwalzen (48) vorgesehen sind.

7. Vorrichtung nach einem oder mehreren der vorherigen Ansprüche, dadurch gekennzeichnet, daß die Abdeckvorrichtung (22) zwei gegenüberliegende Einlaßöffnungen (36) mit dem Boden (4) bildet, denen je eine oder mehrere Paddelwalzen (48) zugeordnet sind.

**Claims**

1. Apparatus for discharging crop material from a collecting container (2) for a combine harvester having at least one discharge screw (12) which is covered by a cover means (22) which with the bottom (4) of the collecting container forms at least one inlet opening (36), wherein the effective cross-section of the inlet opening is variable by means of an adjustable device (48) which is disposed jointly with the discharge screw beneath the cover means, characterised in that the discharge screw (12) is arranged on the bottom (4) and the adjustable device is in the form of at least one paddle drum (48) which is drivable by the same drive means as the discharge screw and which has a plurality of conveyor blades (46), wherein the end of a respective conveyor blade, which is closest to the bottom, forms with the bottom the smallest effective cross-section for the inlet opening (36) and when the paddle drum is stationary the effective cross-section is substantially smaller than when the paddle drum is driven, the longitudinal axis of the paddle drum extending parallel to the longitudinal axis of the discharge screw.

2. Apparatus according to claim 1 characterised in that the inlet opening (36) can be closed when the paddle drum (48) is stationary.

3. Apparatus according to one or more of the preceding claims characterised in that the cover means (22) and/or the shaft (44) of the paddle drum (48) is arranged displaceably in the direction of the bottom (4).

4. Apparatus according to one or more of the preceding claims characterised in that the diameter of the circle of rotation of the paddle drum (48) is larger than the effective cross-section of the inlet opening (36).

5. Apparatus according to one or more of the preceding claims characterised in that the paddle drum (48) is arranged above an inclinedly extending portion of the bottom (4).

6. Apparatus according to one or more of the preceding claims characterised in that numerous paddle drums (48) disposed in side-by-side relationship are arranged above the inclinedly extending portion of the bottom.

7. Apparatus according to one or more of the preceding claims characterised in that the cover means (22) forms with the bottom (4) two oppositely disposed inlet openings (36), wherein one or more paddle drums (48) are associated with each of the inlet openings.

## Revendications

1. Dispositif pour l'évacuation de produits de récolte d'un réservoir collecteur (2) pour une moissonneuse-batteuse, comportant au moins une vis de vidage (12) qui est recouverte par un dispositif de recouvrement (22) formant avec le fond (4) du réservoir collecteur au moins un orifice d'admission (36), la section droite effective de l'orifice d'admission pouvant être modifiée au moyen d'un dispositif (48) déplaçable qui est placé, en même temps que la vis de vidage, au-dessous du dispositif de recouvrement, caractérisé en ce que la vis de vidage (12) est placée au fond (4) et en ce que le dispositif déplaçable est réalisé sous la forme d'au moins un ameneur rotatif à ailettes (48) comportant plusieurs ailettes de transport (46), pouvant être entraîné par le même dispositif d'entraînement que la vis de vidage, l'extrémité de chaque ailette de transport la plus proche du fond formant avec le fond la section droite effective la plus petite pour l'orifice d'admission (36) et la section droite effective étant, lorsque l'ameneur à ailettes est à l'arrêt, beaucoup plus petite que lorsque l'ameneur à ailettes dont l'axe longitudinal est parallèle à l'axe longitudinal de la vis de vidage est entraîné.

2. Dispositif suivant la revendication 1, caractérisé en ce que l'orifice d'admission (36) peut être obturé, lorsque l'ameneur à ailettes (48) est à l'arrêt.

3. Dispositif suivant une ou plusieurs des revendications précédentes, caractérisé en ce que le dispositif de recouvrement (22) et/ou l'arbre (44) de l'ameneur à ailettes (48) sont disposés de façon à être déplaçables dans la direction du fond (4).

4. Dispositif suivant une ou plusieurs des revendications précédentes, caractérisé en ce que le diamètre de révolution de l'ameneur à ailettes (48) est supérieur à la section droite effective de l'orifice d'admission (36).

5. Dispositif suivant une ou plusieurs des revendications précédentes, caractérisé en ce que l'ameneur à ailettes (48) est disposé au-dessus d'une partie oblique du fond (4).

6. Dispositif suivant une ou plusieurs des revendications précédentes, caractérisé en ce que de nombreux ameneurs à ailettes (48) contigus sont prévus au-dessus de la partie de fond oblique.

7. Dispositif suivant une ou plusieurs des revendications précédentes, caractérisé en ce que le dispositif de recouvrement (22) forme avec le fond (4) deux orifices d'admission (36) opposés à chacun desquels correspondent un ou plusieurs ameneurs à ailettes (48).